# FASCICULE DE BREVET EUROPEEN

(11) **EP 4 016 570 B1**
(45) Date de publication et mention de la délivrance du brevet: **20.09.2023**
(21) Numéro de dépôt: 21210626.4
(22) Date de dépôt: 25.11.2021
(51) Int. Cl.: H01H 1/50, H01H 47/00, H01H 47/04, H01H 47/22

(54) **DISPOSITIF DE COMMUTATION ÉLECTROMÉCANIQUE D'UN CIRCUIT ÉLECTRIQUE DE PUISSANCE**
ELEKTROMECHANISCHE SCHALTVORRICHTUNG EINER ELEKTRISCHEN LEISTUNGSSCHALTUNG
ELECTROMECHANICAL SWITCHING DEVICE FOR AN ELECTRIC POWER CIRCUIT

(30) Priorité: 16.12.2020 FR 2013313
(43) Date de publication de la demande: 22.06.2022
(73) Titulaire: Airbus Operations SAS, 31060 Toulouse (FR)
(72) Inventeur: ROUSSET, David, 31060 TOULOUSE (FR); LACOSTE, Jean-Marc, 31060 TOULOUSE (FR)
(74) Mandataire: Fantin, Laurent

(56) Documents cités:
- EP-A1- 2 270 829
- EP-B1- 2 210 262
- DE-A1-102014 203 424
- DE-C1- 4 244 118
- JP-A- 2010 218 694

## Description

La présente demande se rapporte à un dispositif de commutation électromécanique d'un circuit électrique de puissance.

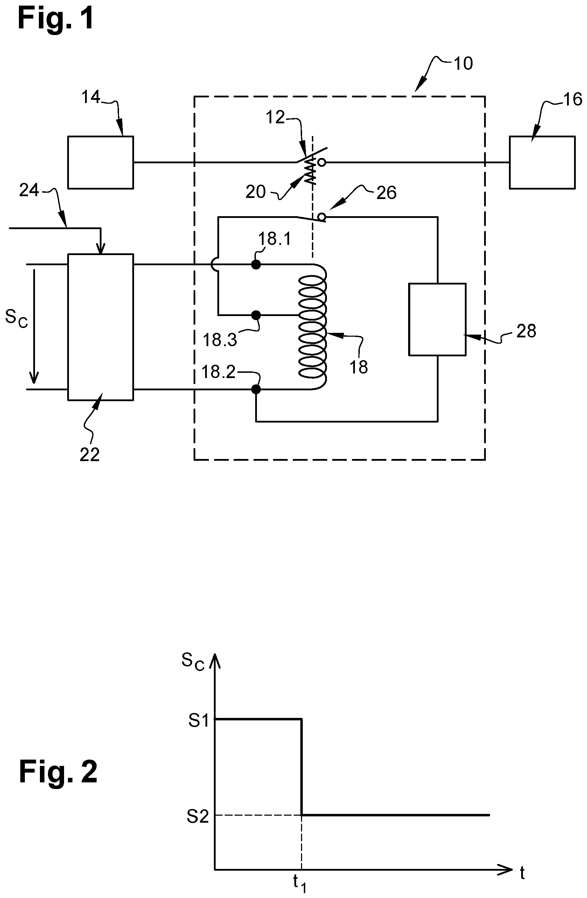

Selon un mode de réalisation visible sur la figure 1, un dispositif de commutation 10 d'un circuit électrique de puissance comprend :
- au moins un contacteur principal 12 configuré pour occuper un état ouvert dans lequel il isole une source électrique 14 et une charge électrique 16 du circuit électrique de puissance ainsi qu'un état fermé dans lequel il relie la source électrique 14 et la charge électrique 16,
- une bobine 18 configurée pour provoquer la fermeture du contacteur principal 12 et son maintien à l'état fermé lorsque la bobine 18 est alimentée,
- un ressort 20 configuré pour provoquer l'ouverture du contacteur principal 12 et son maintien à l'état ouvert lorsque la bobine 18 n'est plus alimentée,
- une alimentation de commande 22 configurée pour appliquer un signal de commande Sc aux première et deuxième bornes d'extrémité 18.1, 18.2 de la bobine 18 à réception d'un signal 24 et maintenir ce signal de commande Sc tant que le contacteur principal 12 doit rester à l'état fermé.

Le ressort 20 est choisi de manière à ce qu'un effort de maintien exercé par la bobine 18 pour le maintenir comprimé soit moindre qu'un effort de commutation exercé par la bobine 18 pour provoquer sa compression.

Ainsi, lorsque le contacteur principal 12 est à l'état fermé, la force exercée par la bobine 18 est réduite grâce à un retrait de l'alimentation d'une partie de la bobine 18 ou à une réduction du courant qui la parcourt par exemple.

Selon un mode de réalisation décrit sur la figure 1 et dans le document EP2210262, le dispositif de commutation 10 comprend un circuit reliant une borne intermédiaire 18.3 de la bobine 18 et la deuxième borne d'extrémité 18.2 de la bobine 18, ledit circuit comportant un contacteur auxiliaire 26 configuré pour occuper alternativement des états ouvert et fermé contrôlés par la bobine 18 ainsi qu'un système de limitation de courant réarmable 28, les contacteurs principal et auxiliaire 12, 26 étant configurés pour commuter simultanément.

Le principe de fonctionnement est le suivant :
Lorsque l'alimentation de commande 22 applique un signal de commande Sc, le système de limitation de courant réarmable 28 ayant une résistance minimale, le courant circule dans la partie de la bobine 18 située entre la première borne d'extrémité 18.1 et la borne intermédiaire 18.3 et atteint la deuxième borne d'extrémité 18.2 de la bobine 22 via le contacteur auxiliaire 26 et le système de limitation de courant réarmable 28. La valeur du signal de commande Sc est ajustée pour que la bobine 18 exerce un effort de commutation suffisant pour provoquer une commutation simultanée des contacteurs principal et auxiliaire 12, 26 respectivement à l'état fermé et à l'état ouvert. Dès lors, après une certaine durée t1, le niveau du signal de commande Sc est réduit, comme illustré sur la figure 2, la bobine exerçant un effort de maintien inférieur à l'effort de commutation. Ainsi, le signal de commande Sc présente un premier niveau S1, de l'ordre de 6 à 7 ampères, pour provoquer la commutation du contacteur principal 12 puis un deuxième niveau S2 inférieur au premier niveau S1 pour le maintenir à l'état fermé.

Le système de limitation de courant réarmable 28 est configuré pour avoir une résistance minimale tant que le courant qui le traverse est inférieur à un seuil donné, avoir une résistance maximale lorsque le courant qui le traverse est supérieur au seuil donné pendant une durée donnée et revenir à une résistance minimale dès que le courant qui le traverse revient sous le seuil donné. Ce système de limitation de courant réarmable 28 permet de pallier un dysfonctionnement du contacteur auxiliaire 26 qui pourrait ne pas s'ouvrir.

Afin d'obtenir un ensemble compact et léger, la bobine 18 est généralement conçue pour générer un effort de commutation sur une durée limitée dans le temps.

Les dispositifs de commutation électromécaniques existants sont adaptés pour des tensions de l'ordre de 115 V pour le circuit électrique de puissance, inférieures à 300 V, et ne sont pas adaptés pour des tensions supérieures, de l'ordre de 1000 V. A ces tensions, des courants de court-circuit atteignant plusieurs kilos ampères peuvent apparaître et générer des phénomènes de « lévitation » qui tendent à initier l'ouverture du contacteur principal 12 malgré l'action de la bobine 18. Cette ouverture non désirée du contacteur principal 12 provoque des arcs électriques qui peuvent mener à sa dégradation partielle ou totale.

Le document DE102014203424 propose un dispositif de commutation comprenant au moins un contacteur principal, reliant des batteries et une charge, configuré pour occuper des premier et deuxième états isolant ou reliant les batteries et la charge. Le dispositif de commutation comprend également un ressort, une alimentation de commande ainsi qu'un actionneur configuré pour provoquer un changement du premier état vers le deuxième état du contacteur principal à l'encontre d'un effort généré par le ressort lorsque l'actionneur est alimenté par un signal de commande généré par l'alimentation de commande égal à un premier niveau, le ressort étant agencé de manière à provoquer un changement du deuxième état vers le premier état du contacteur principal lorsque l'actionneur n'est pas alimenté, l'alimentation de commande étant configurée pour que le signal de commande soit égal au premier niveau pendant une première durée donnée à compter de la réception d'un premier signal puis à un deuxième niveau, inférieur au premier niveau, pour maintenir le contacteur principal dans le deuxième état tant que le contacteur principal doit être maintenu dans le deuxième état.

Selon ce document DE102014203424, lorsque le signal de commande est à un deuxième niveau, l'alimentation de commande est configurée pour augmenter le niveau du signal de commande à un troisième niveau pendant une durée donnée pour éviter des phénomènes de « lévitation ».

Toutefois, cette solution n'est pas optimale car le passage du deuxième niveau au troisième niveau et la durée pendant laquelle le signal de commande est maintenu au troisième niveau ne sont pas optimaux.

La présente invention vise à remédier à tout ou partie des inconvénients de l'art antérieur. A cet effet, l'invention a pour objet un dispositif de commutation comprenant au moins un contacteur principal ainsi qu'un tronçon amont et un tronçon aval d'un circuit électrique de puissance positionnés de part et d'autre du contacteur principal, ledit contacteur principal étant configuré pour occuper des premier et deuxième états isolant ou reliant les tronçons amont et aval. Le dispositif de commutation comprend également un ressort, une alimentation de commande ainsi qu'un actionneur configuré pour provoquer un changement du premier état vers le deuxième état du contacteur principal à l'encontre d'un effort généré par le ressort lorsque l'actionneur est alimenté par un signal de commande généré par l'alimentation de commande égal à un premier niveau, le ressort étant agencé de manière à provoquer un changement du deuxième état vers le premier état du contacteur principal lorsque l'actionneur n'est pas alimenté, l'alimentation de commande étant configurée pour que le signal de commande soit égal au premier niveau pendant une première durée donnée à compter de la réception d'un premier signal puis à un deuxième niveau, inférieur au premier niveau, pour maintenir le contacteur principal dans le deuxième état tant que le contacteur principal doit être maintenu dans le deuxième état, l'alimentation de commande étant configurée pour que le signal de commande appliqué à l'actionneur soit égal à un troisième niveau, supérieur au deuxième niveau, à réception d'un deuxième signal, le signal de commande étant maintenu au troisième niveau pendant une deuxième durée donnée ou tant que le courant traversant le contacteur principal dépasse le seuil de fonctionnement donné. Selon l'invention, le dispositif de commutation comprend au moins un capteur de courant configuré pour transmettre le deuxième signal à l'alimentation de commande si un courant traversant le contacteur principal dépasse un seuil de fonctionnement donné. En complément, le dispositif de commutation comprend un système de protection réarmable configuré pour interrompre le deuxième signal après la deuxième durée, ledit système de protection réarmable étant configuré pour occuper un état fermé dans lequel il laisse passer le deuxième signal lorsque ce dernier présente une valeur inférieure à un seuil de déclenchement donné ainsi qu'un état ouvert dans lequel il interrompt le deuxième signal dès lors que ce dernier a une valeur supérieure ou égale au seuil de déclenchement donné pendant la deuxième durée donnée, ledit système de protection réarmable revenant à l'état fermé lorsque le deuxième signal est de nouveau inférieur au seuil de déclenchement donné. L'invention permet d'éviter un changement d'état intempestif du contacteur principal en présence de courants de court-circuit élevés, de l'ordre de plusieurs kilos ampères, en augmentant temporairement l'effort généré par l'actionneur lorsque le capteur de courant détecte un courant supérieur ou égal au seuil de fonctionnement donné. De plus, le système de protection réarmable permet de contrôler de manière simple la durée de maintien du signal de commande au troisième niveau.

Selon une autre caractéristique, le deuxième signal a une valeur nulle lorsque le courant traversant le capteur de courant est inférieur au seuil de fonctionnement et une valeur de consigne supérieure à 0 lorsque le courant traversant le capteur de courant est supérieur ou égal au seuil de fonctionnement, le seuil de déclenchement donné étant légèrement inférieur à la valeur de consigne du deuxième signal.

Selon une autre caractéristique, le capteur de courant est positionné sur le tronçon aval, juste après le contacteur principal.

Selon une autre caractéristique, le troisième niveau est supérieur ou égal au premier niveau. L'invention a également pour objet un aéronef comportant un circuit de puissance électrique comprenant au moins un dispositif de commutation selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est un schéma d'un dispositif de commutation d'un circuit électrique de puissance illustrant un mode de réalisation de l'art antérieur,
- La figure 2 est un diagramme montrant un signal de commande en fonction du temps illustrant un mode de fonctionnement de l'art antérieur,
- La figure 3 est un schéma d'un dispositif de commutation d'un circuit électrique de puissance illustrant un exemple qui ne fait pas partie de l'invention,
- La figure 4 est un diagramme montrant un signal de commande en fonction du temps illustrant un mode de fonctionnement de l'invention, et
- La figure 5 est un schéma d'un dispositif de commutation d'un circuit électrique de puissance illustrant un mode de réalisation de l'invention.

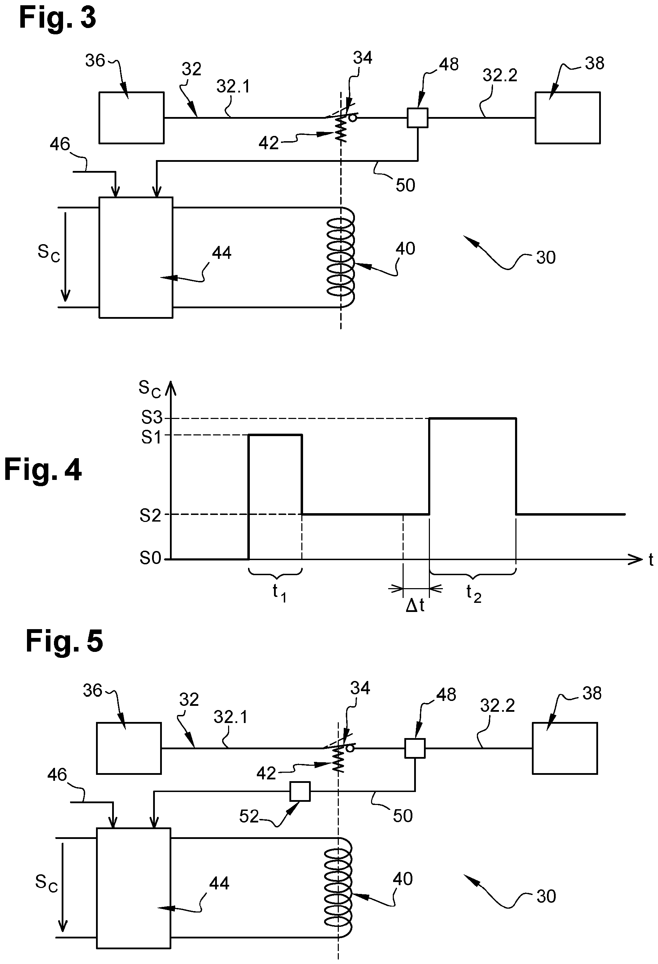

Sur la figure 3, un dispositif de commutation 30 d'un circuit électrique de puissance 32 comprend au moins un contacteur principal 34 ainsi qu'un tronçon amont 32.1 et un tronçon aval 32.2 du circuit électrique de puissance 32 positionnés de part et d'autre du contacteur principal 34. Le contacteur principal 34 est configuré pour occuper un état ouvert, également appelé premier état (visible en pointillés), dans lequel il isole le tronçon amont 32.1 du tronçon aval 32.2 et interdit le passage d'un courant ainsi qu'un état fermé également appelé deuxième état, dans lequel il relie les tronçons amont et aval 32.1, 32.2 et autorise le passage d'un courant. Selon une application non limitative, le contacteur principal 34 est utilisé pour relier ou isoler au moins une source électrique 36 et au moins une charge électrique 38 dans un circuit électrique de puissance d'un aéronef. Le contacteur principal 34 est configuré pour fonctionner à des tensions élevées, supérieures à 300 V, de l'ordre de 1000 V. Bien entendu, il pourrait fonctionner à des tensions inférieures de l'ordre de 115 V.

En fonctionnement, un courant nominal ne dépassant pas un seuil de fonctionnement de l'ordre de plusieurs centaines d'ampères circule dans le circuit électrique de puissance 32. Dans certaines circonstances, un courant de court-circuit dépassant le seuil de fonctionnement, de l'ordre de plusieurs kilos ampères, peut circuler dans le circuit électrique de puissance 32.

Le dispositif de commutation 30 comprend :
- Un actionneur 40 configuré pour provoquer la fermeture du contacteur principal 34 et son maintien à l'état fermé lorsque l'actionneur est alimenté,
- un ressort 42 configuré pour provoquer l'ouverture du contacteur principal 34 et son maintien à l'état ouvert lorsque l'actionneur 40 n'est plus alimenté,
- une alimentation de commande 44 configurée pour appliquer un signal de commande Sc à l'actionneur 40 à réception d'un premier signal 46 et maintenir ce signal de commande Sc tant que le contacteur principal 34 doit rester à l'état fermé.

Le signal de commande Sc peut être une énergie, une tension, une intensité ou toute autre grandeur physique.

Selon un mode de réalisation, l'actionneur 40 est une bobine comportant des première et deuxième bornes d'extrémité auxquelles est appliqué le signal de commande Sc.

Quel que soit le mode de réalisation, l'actionneur 40 est configuré pour provoquer un changement d'un premier état (ou état ouvert) vers un deuxième état (ou état fermé) du contacteur principal 34 à l'encontre d'un effort généré par le ressort 42 lorsque l'actionneur 40 est alimenté par un signal de commande Sc ayant un premier niveau S1, le ressort 42 provoquant un changement du deuxième état vers le premier état du contacteur principal 34 lorsque l'actionneur 40 n'est pas alimenté.

Selon un mode de réalisation, le ressort 42 est configuré de manière à ce qu'un effort de maintien exercé par l'actionneur 40 pour le maintenir comprimé soit moindre qu'un effort de commutation exercé par l'actionneur 40 pour provoquer sa compression.

Ainsi, l'actionneur 40, sollicité par le signal de commande Sc à un premier niveau S1, exerce un effort de commutation pour provoquer un changement d'état du contacteur principal 34 supérieur à un effort de maintien du contacteur principal 34 dans un état donné lorsque l'actionneur 40 est sollicité par le signal de commande Sc à un deuxième niveau S2 inférieur au premier niveau S1.

Comme illustré sur la figure 4, l'alimentation de commande 44 est configurée pour générer un signal de commande Sc égal à :
- un premier niveau S1 pendant une première durée donnée t1 à compter de la réception du premier signal 46 pour provoquer un changement d'état du contacteur principal 34 (passage de l'état ouvert à l'état fermé),
- un deuxième niveau S2, inférieur au premier niveau S1, pour maintenir le contacteur principal 34 dans un état donné (état fermé) tant que le contacteur principal 34 doit être maintenu dans l'état donné.

Comme décrit dans le document EP2210262, l'alimentation de commande 44 peut comprendre un circuit de commande reliant une borne intermédiaire de la bobine et la deuxième borne d'extrémité de la bobine, ledit circuit de commande comportant un contacteur auxiliaire configuré pour occuper alternativement des états ouvert et fermé contrôlés par la bobine ainsi qu'un système de limitation de courant réarmable, les contacteurs principal et auxiliaire étant configurés pour commuter simultanément.

Le dispositif de commutation 30 comprend au moins un capteur de courant 48, positionné sur le tronçon amont 32.1 ou le tronçon aval 32.2 du circuit électrique de puissance 32, configuré pour émettre un deuxième signal 50 à l'alimentation de commande 44 si un courant traversant le contacteur principal 34 dépasse un seuil de fonctionnement donné. En complément, l'alimentation de commande 44 est configurée pour générer un signal de commande Sc égal à un troisième niveau S3 supérieur au deuxième niveau S2 appliqué à l'actionneur 40, à réception du deuxième signal 50 émis par le capteur de courant 48. Selon une configuration, le troisième niveau S3 est supérieur ou égal au premier niveau S1.

Le deuxième signal 50 a une valeur nulle lorsque le courant traversant le capteur de courant 48 est inférieur au seuil de fonctionnement et une valeur de consigne supérieure à 0 lorsque le courant traversant le capteur de courant 48 est supérieur ou égal au seuil de fonctionnement.

Selon une configuration, le capteur de courant 48 est positionné sur le tronçon aval 32.2 juste après le contacteur principal 34. Quel que soit l'agencement, le capteur de courant 48 est positionné de manière à être traversé par le même courant que le contacteur principal 34. En présence de plusieurs contacteurs principaux 34, le dispositif de commutation peut comprendre plusieurs capteurs de courant 48, un pour chaque capteur principal 34.

Comme illustré sur la figure 4, il existe un décalage temporel Δt entre le moment de détection du courant de court-circuit dépassant le seuil de fonctionnement et le passage du signal de commande Sc du deuxième niveau S2 au troisième niveau S3.

Le signal de commande Sc est maintenu au troisième niveau S3 pendant une deuxième durée donnée t2 ou tant que le courant de court-circuit dépasse le seuil de fonctionnement donné. Selon un mode de réalisation, l'alimentation de commande 44 comprend une temporisation permettant de maintenir le signal de commande Sc au troisième niveau S3 pendant la deuxième durée donnée t2 et de le réduire au deuxième niveau S2 après cette deuxième durée donnée t2.

Selon une caractéristique de l'invention visible sur la figure 5, le dispositif de commutation 30 comprend un système d'arrêt 52 configuré pour interrompre le deuxième signal 50 après la deuxième durée t2 afin que le signal de commande Sc généré par l'alimentation de commande 44 passe du troisième niveau S3 au deuxième niveau S2 après la deuxième durée donnée t2. Selon une configuration, le système d'arrêt 52 est un système de protection réarmable (par exemple un fusible réarmable), comme illustré dans le document EP2210262 par exemple. Ce système de protection réarmable est configuré pour occuper un état fermé et laisser passer le deuxième signal 50 lorsque ce dernier présente une valeur inférieure à un seuil de déclenchement donné ainsi qu'un état ouvert et interrompre le deuxième signal 50 dès lors que ce dernier a une valeur supérieure ou égale au seuil de déclenchement donné pendant la deuxième durée donnée t2, ce système de protection réarmable revenant à l'état fermé lorsque le deuxième signal 50 est de nouveau inférieur au seuil de déclenchement donné. Ce seuil de déclenchement donné est légèrement inférieur à la valeur de consigne du deuxième signal 50. Ainsi, en l'absence du deuxième signal 50, le système de protection réarmable est à l'état fermé. Dès que le capteur de courant 48 génère un deuxième signal 50 avec une valeur de consigne supérieure au seuil de déclenchement donné, le système de protection réarmable reste à l'état fermé pendant la deuxième durée donnée t2 puis passe automatiquement à l'état ouvert si bien que l'alimentation de commande 44 ne reçoit plus le deuxième signal 50. Ainsi, tant que l'alimentation de commande 44 reçoit le deuxième signal 50, elle génère un signal de commande égal au troisième niveau S3 supérieur ou égal au premier niveau S1. Dès que l'alimentation de commande 44 ne reçoit plus le deuxième signal 50, elle génère un signal de commande égal au deuxième niveau S2 inférieur aux premier et troisième niveaux S1, S3.

L'invention permet d'éviter les phénomènes de « lévitation » en présence de courants de court-circuit élevés, de l'ordre de plusieurs kilos ampères, en augmentant temporairement l'effort généré par l'actionneur 40 lorsque le capteur de courant 48 détecte un courant supérieur à un seuil de fonctionnement donné. Le mode de réalisation visible sur la figure 5 permet de contrôler de manière simple la durée de maintien du signal de commande Sc au troisième niveau S3.

## Revendications

1. Dispositif de commutation (30) comprenant au moins un contacteur principal (34) ainsi qu'un tronçon amont (32.1) et un tronçon aval (32.2) d'un circuit électrique de puissance (32) positionnés de part et d'autre du contacteur principal (34), ledit contacteur principal (34) étant configuré pour occuper des premier et deuxième états isolant ou reliant les tronçons amont et aval (32.1, 32.2), le dispositif de commutation (30) comprenant un ressort (42), une alimentation de commande (44) ainsi qu'un actionneur (40) configuré pour provoquer un changement du premier état vers le deuxième état du contacteur principal (34) à l'encontre d'un effort généré par le ressort (42) lorsque l'actionneur (40) est alimenté par un signal de commande généré par l'alimentation de commande (44) égal à un premier niveau (S1), le ressort (42) étant agencé de manière à provoquer un changement du deuxième état vers le premier état du contacteur principal (34) lorsque l'actionneur (40) n'est pas alimenté, l'alimentation de commande (44) étant configurée pour que le signal de commande soit égal au premier niveau (S1) pendant une première durée donnée (t1) à compter de la réception d'un premier signal (46) puis à un deuxième niveau (S2), inférieur au premier niveau (S1), pour maintenir le contacteur principal (34) dans le deuxième état tant que le contacteur principal (34) doit être maintenu dans le deuxième état, l'alimentation de commande (44) étant configurée pour que le signal de commande appliqué à l'actionneur (40) soit égal à un troisième niveau (S3) supérieur au deuxième niveau (S2), à réception d'un deuxième signal (50), en ce que le signal de commande est maintenu au troisième niveau (S3) pendant une deuxième durée donnée (t2) ou tant que le courant traversant le contacteur principal (34) dépasse le seuil de fonctionnement donné, **caractérisé en ce que** le dispositif de commutation (30) comprend au moins un capteur de courant (48) configuré pour transmettre le deuxième signal (50) à l'alimentation de commande (44) si un courant traversant le contacteur principal (34) dépasse un seuil de fonctionnement donné, **en ce que** le dispositif de commutation (30) comprend un système de protection réarmable configuré pour interrompre le deuxième signal (50) après la deuxième durée (t2), ledit système de protection réarmable étant configuré pour occuper un état fermé dans lequel il laisse passer le deuxième signal (50) lorsque ce dernier présente une valeur inférieure à un seuil de déclenchement donné ainsi qu'un état ouvert dans lequel il interrompt le deuxième signal (50) dès lors que ce dernier a une valeur supérieure ou égale au seuil de déclenchement donné pendant la deuxième durée donnée (t2), ledit système de protection réarmable revenant à l'état fermé lorsque le deuxième signal (50) est de nouveau inférieur au seuil de déclenchement donné.

2. Dispositif de commutation (30) selon la revendication précédente, **caractérisé en ce que** le deuxième signal (50) a une valeur nulle lorsque le courant traversant le capteur de courant (48) est inférieur au seuil de fonctionnement donné et une valeur de consigne supérieure à 0 lorsque le courant traversant le capteur de courant (48) est supérieur ou égal au seuil de fonctionnement donné, le seuil de déclenchement donné étant légèrement inférieur à la valeur de consigne du deuxième signal (50).

3. Dispositif de commutation (30) selon l'une des revendications précédentes, **caractérisé en ce que** le capteur de courant (48) est positionné sur le tronçon aval (32.2) juste après le contacteur principal (34).

4. Dispositif de commutation (30) selon l'une des revendications précédentes, **caractérisé en ce que** le troisième niveau (S3) est supérieur ou égal au premier niveau (S1).

5. Aéronef comportant un circuit de puissance électrique comprenant au moins un dispositif de commutation selon l'une des revendications précédentes.

## Patentansprüche

1. Schaltvorrichtung (30) mit wenigstens einem Hauptschalter (34) sowie einem stromaufwärts gelegenen Abschnitt (32.1) und einem stromabwärts gelegenen Abschnitt (32.2) einer elektrischen Leistungsschaltung (32), die beidseits des Hauptschalters (34) angeordnet sind, wobei der Hauptschalter (34) so eingerichtet ist, dass er einen ersten und einen zweiten Zustand einnimmt, die den stromaufwärts gelegenen und den stromabwärts gelegenen Abschnitt (32.1, 32.2) isolieren oder verbinden, wobei die Schaltvorrichtung (30) eine Feder (42), eine Steuerversorgung (44) sowie ein Stellglied (40) umfasst, das so eingerichtet ist, dass es eine Änderung des Hauptschalters (34) vom ersten Zustand in den zweiten Zustand gegen eine von der Feder (42) erzeugte Kraft bewirkt, wenn das Stellglied (40) mit einem von der Steuerversorgung (44) erzeugten Steuersignal versorgt wird, das gleich einem ersten Pegel (S1) ist, wobei die Feder (42) so angeordnet ist, dass sie eine Änderung des Hauptschalters (34) vom zweiten Zustand in den ersten Zustand bewirkt, wenn das Stellglied (40) nicht mit Strom versorgt wird, wobei die Steuerstromversorgung (44) so eingerichtet ist, dass das Steuersignal für eine erste gegebene Zeitdauer (t1) ab dem Empfang eines ersten Signals (46) gleich dem ersten Pegel (S1) ist und dann gleich einem zweiten Pegel (S2) ist, der niedriger als der erste Pegel (S1) ist, um den Hauptschalter (34) in dem zweiten Zustand zu halten, solange der Hauptschalter (34) in dem zweiten Zustand gehalten werden muss, wobei die Steuerversorgung (44) so eingerichtet ist, dass das an das Stellglied (40) angelegte Steuersignal bei Empfang eines zweiten Signals (50) gleich einem dritten Pegel (S3) ist, der höher als der zweite Pegel (S2) ist, und dass das Steuersignal für eine zweite gegebene Zeitdauer (t2) auf dem dritten Pegel (S3) gehalten wird oder solange der durch den Hauptschalter (34) fließende Strom den gegebenen Betriebsschwellenwert überschreitet, **dadurch gekennzeichnet, dass** die Schaltvorrichtung (30) wenigstens einen Stromsensor (48) aufweist, der so eingerichtet ist, dass er das zweite Signal (50) an die Steuerversorgung (44) überträgt, wenn ein durch den Hauptschalter (34) fließender Strom eine gegebene Betriebsschwelle überschreitet, dass die Schaltvorrichtung (30) ein rücksetzbares Schutzsystem umfasst, das so eingerichtet ist, dass es das zweite Signal (50) nach der zweiten Zeitdauer (t2) unterbricht, wobei das rückstellbare Schutzsystem so eingerichtet ist, dass es einen geschlossenen Zustand einnimmt, in dem es das zweite Signal (50) durchlässt, wenn dieses einen Wert unterhalb einer gegebenen Auslöseschwelle aufweist, sowie einen offenen Zustand, in dem es das zweite Signal (50) unterbricht, sobald dieses während der zweiten gegebenen Dauer (t2) einen Wert über oder gleich der gegebenen Auslöseschwelle aufweist, wobei das rückstellbare Schutzsystem in den geschlossenen Zustand zurückkehrt, wenn das zweite Signal (50) erneut unterhalb der gegebenen Auslöseschwelle liegt.

2. Schaltvorrichtung (30) nach dem vorhergehenden Anspruch, **dadurch gekennzeichnet, dass** das zweite Signal (50) einen Wert von Null hat, wenn der Strom durch den Stromsensor (48) unterhalb der gegebenen Betriebsschwelle liegt, und einen Sollwert größer als Null hat, wenn der Strom durch den Stromsensor (48) größer oder gleich der gegebenen Betriebsschwelle ist, wobei die gegebene Auslöseschwelle etwas niedriger als der Sollwert des zweiten Signals (50) ist.

3. Schaltvorrichtung (30) nach einem der vorhergehenden Ansprüche, **dadurch gekennzeichnet, dass** der Stromsensor (48) auf dem stromabwärts gelegenen Abschnitt (32.2) unmittelbar nach dem Hauptschalter (34) angeordnet ist.

4. Schaltvorrichtung (30) nach einem der vorhergehenden Ansprüche, **dadurch gekennzeichnet, dass** die dritte Stufe (S3) größer oder gleich der ersten Stufe (S1) ist.

5. Luftfahrzeug mit einer elektrischen Leistungsschaltung, die wenigstens eine Schaltvorrichtung nach einem der vorhergehenden Ansprüche umfasst.

## Claims

1. A switching device (30) comprising at least one main breaker (34) together with an upstream section (32.1) and a downstream section (32.2) of a power electrical circuit (32) positioned on either side of the main breaker (34), said main breaker (34) being configured so as to occupy first and second states isolating or connecting the upstream and downstream sections (32.1, 32.2), the switching device (30) comprising a spring (42), a control power supply (44) together with an actuator (40) configured so as to cause a change from the first state to the second state of the main breaker (34) counter to a force generated by the spring (42) when the actuator (40) is powered by a control signal generated by the control power supply (44) equal to a first level (S1), the spring (42) being arranged so as to cause a change from the second state to the first state of the main breaker (34) when the actuator (40) is not powered, the control power supply (44) being configured so that the control signal is equal to the first level (S1) for a given first period of time (t1) counting from the receipt of a first signal (46) then to a second level (S2), lower than the first level (S1), so as to hold the main breaker (34) in the second state for as long as the main breaker (34) has to be held in the second state, the control power supply (44) being configured so that the control signal applied to the actuator (40) is equal to a third level (S3) higher than the second level (S2), upon receiving a second signal (50), in that the control signal is held at the third level (S3) for a given second period of time (t2) or for as long as the current flowing in the main breaker (34) exceeds the given operating threshold, **characterized in that** the switching device (30) comprises at least one current sensor (48) configured for transmitting the second signal (50) to the control power supply (44) if a current flowing in the main breaker (34) exceeds a given operating threshold, **in that** the switching device (30) comprises a re-armable protection system configured for interrupting the second signal (50) after the second period of time (t2), said re-armable protection system being configured so as to occupy a closed state in which it lets the second signal (50) pass when the latter has a value lower than a given triggering threshold, together with a open state in which it interrupts the second signal (50) whenever the latter has a value higher than or equal to the given triggering threshold for the given second period of time (t2), said re-armable protection system returning to the closed state when the second signal (50) is once again lower than the given triggering threshold.

2. The switching device (30) as claimed in the preceding claim, **characterized in that** the second signal (50) has a value of zero when the current flowing in the current sensor (48) is lower than the given operating threshold and a setpoint value greater than zero when the current flowing in the current sensor (48) is higher than or equal to the given operating threshold, the given triggering threshold being slightly below the setpoint value of the second signal (50).

3. The switching device (30) as claimed in one of the preceding claims, **characterized in that** the current sensor (48) is positioned in the downstream section (32.2) just after the main breaker (34).

4. The switching device (30) as claimed in one of the preceding claims, **characterized in that** the third level (S3) is higher than or equal to the first level (S1).

5. An aircraft comprising an power electrical circuit comprising at least one switching device as claimed in one of the preceding claims.
